# EUROPEAN PATENT APPLICATION

(11) **EP 1 026 586 A2**
(43) Date of publication of application: **09.08.2000**
(21) Application number: 00400308.3
(22) Date of filing: 03.02.2000
(51) Int. Cl.: G06F 9/44

(54) **Method and system for managing and displaying programs having a plurality of programming levels**

(30) Priority: 04.02.1999 US 244896
(71) Applicant: Sun Microsystems, Inc., Palo Alto, California 94303 (US)
(72) Inventor: Lewis, Bradley R., Broomfield, CO 80020 (US); Week, Jon J., Broomfield, CO 80020 (US); Week, Jeremy C., Broomfield, CO 80020 (US); Boucher, Michael L., Lafayette, CO 80026 (US)
(74) Representative: Chameroy, Claude

(57) **Abstract**

Systems and methods consistent with the present invention improve upon conventional means of managing large build program because they provide software developers with a tool that allows for more efficient text editing of code in the large build program. By storing makefiles and configuration files associated with a particular build version in a centralized file, the tool allows developers to edit individual lines of the makefile or configuration files. Developers may edit individual files by inserting, appending, or delete lines of code within the makefile or configuration file. This feature permits propagation of the changes down through lower levels of within the build version when the large build program is compiled.

## Description

### BACKGROUND OF THE INVENTION

The present invention relates to the field of data processing and, more particularly, to a method, system, and apparatus for managing and displaying large build programs by allowing global editing of code and the permeating of changes throughout the large build program.

Large build software systems, or programs, such as operating systems, include several levels of code, including a level that is platform independent and a level that is platform dependent. A "large build software system" refers to a program containing many modules, sometimes hundreds, that need to be compiled and linked to form an executable and libraries before the program can be run. Operating systems, for example, have different requirements depending on the type of processor used, the particular chip architecture employed, the compiler used to generate the executable code, etc. The code needed to implement the operating system will likely entail different versions or configurations to cover these variances. Each of these versions, however, have some level of commonality and will share code and data that are platform independent.

Software developers faced with the task of working on programs with multiple configurations spend much of their time and efforts performing repeated edits of the same modules throughout each of the various configurations in large build environments. For example, a compiler can typically insert one or more of a range of debug options into the executable code. Such options can be effective at saving the programmer's time and effort early in the software development process. If, however, a module is edited to update or test a particular version of an operating system (OS) or particular module within the OS, the software developer must locate each occurrence of the module in each of the different configurations and manually make the appropriate edits. In particular, when changes are made to common modules, the editing tasks are often tedious and error prone. Making this type of change may require hours of text editing and debugging to ensure that the changes make their way throughout the other levels of the build. The inefficiency associated with this method not only interferes with development time, but also may lead to inconsistencies if changes to a particular module are not effectively implemented throughout the program's other configurations.

Another common approach to generating and managing the various program versions in the software development process is for the programmer to write makefiles and configuration files. A makefile is a file containing a list of object code files and executable files, each with an associated command sequence that generates the listed object or executable file from source code and object code files. Configuration files include a listing of compiler options, commands, directory locations, and multiple other options used by the makefiles. Each version includes a unique configuration script in which certain options have changed, while other options remain unchanged from the previous build.

Several integrated development environments (IDE) manage a series of "program files" for different program builds. Similar to the makefiles described above, the series of these program files correspond to a program that can be manually edited by a developer; the edits, however, do not take place globally. In other words, edits made to some makefiles do not automatically filter to the same makefile in the other builds or versions. This failure requires extra editing time and, as discussed above, increases the chances of inconsistencies between the versions of a particular program because changes to one version may not be integrated into later versions or other configurations.

U.S. Pat. No. 5,850,554 discloses another method for managing different versions of software programs. The '554 patent discloses a compiler tool set that generates various version types of a program. The compiler tool of the '554 patent produces an augmented object code file that contains sufficient information to subsequently generate different versions of the program when invoked by a programmer command, a build script, or a makefile. The disclosed tool set purportedly minimizes recompilation by producing an augmented object file that contains sufficient information to subsequently generate different configurations of the program. The augmented object file contains object files that can be specified by a developer and linked to a particular configuration of the program during compilation.

Conventional large build management tools, however, fail to address the problems associated with making edits to a particular program and ensuring that changes are properly implemented throughout the different configurations, builds, or versions of the program. Given the time and effort needed to make the required text edits to create different versions of a program and the potential inconsistencies that arise due to manual edits, it is desirable to improve they way large build programs are managed and edited.

### SUMMARY OF THE INVENTION

Systems and methods consistent with the present invention improve upon conventional ways of managing large build programs by providing a tool that allows global editing of common text files in a large build program. This feature ensures that edits made to the makefiles of the large build program are globally applied to all versions because edits made to common code automatically propagates to lower programming levels and throughout different configurations or versions of the system. Accessing a common text file location from a particular level of the large build program allows the developer to edit code that is common to the selected level. Systems and methods consistent with the present invention further ensure that valuable developer time and effort is not wasted by requiring the reentry of the same text edits dozens of times.

Specifically, systems and methods consistent with the present invention provide a method for managing versions of a program having a plurality of programming levels. The method includes displaying the program as a hierarchical tree structure, wherein a branch of the tree corresponds to a programming level, wherein each branch includes a plurality of nodes, and wherein lower-level nodes include code common to upper-level nodes from which the lower-level nodes depend; storing the common code in a file; receiving a user input selecting a node for editing; editing a line of code within the file; and compiling the program to create a new version of the program, the new version including the edited code.

Systems and methods consistent with the present invention also provide a data processing system for managing a large build software program having a plurality of levels. The system includes a memory configured to store the large build software program; a development tool configured to display the large build software program as a hierarchical tree structure, wherein a branch of the tree corresponds to one of the programming levels, wherein each branch includes a plurality of nodes, and wherein lower-level nodes include code common to upper-level nodes from which the lower-level nodes depend. The development tool is further configured to receive a user input selecting a node for editing and to edit a line of code within the file in accordance with a user instruction. The system also includes at least one processor configured to generate a new version of the program, the new version including the edited code.

Systems and methods consistent with the present invention also provide a method in a data processing system comprising: receiving a program with a plurality of modules; and displaying the program in a hierarchical tree structure, wherein each branch of the tree includes at least one module.

The summary and the following detailed description should not restrict the scope of the claimed invention. Both provide examples and explanations to enable others to practice the invention.

### BRIEF DESCRIPTION OF THE DRAWINGS

The accompanying drawings, which are incorporated in and constitute a part of this specification, illustrate an embodiment of the invention and, together with the description, serve to explain the advantages, and principles of the invention:
Fig. 1 depicts a computer suitable for use with systems and methods consistent with the present invention;
Fig. 2 depicts a block diagram representative of a large build software program suitable for use with systems and methods consistent with the present invention;
Fig. 3A depicts an example of a centralized configuration file suitable for use with systems and methods consistent with the present invention;
Fig. 3B depicts a portion of a makefile suitable for use with systems and methods consistent with the present invention;
Fig. 4 depicts a representative view of a graphical user interface (GUI) that may be used in accordance with systems and methods consistent with the present invention; and
Fig. 5 depicts the major steps of a method for managing a large build computer program for use with systems and methods consistent with the present invention.

### DETAILED DESCRIPTION

Reference will now be made to preferred embodiments of this invention, examples of which are shown in the accompanying drawings and will be obvious from the description of the invention. In the drawings, the same reference numbers represent the same or similar elements in the different drawings whenever possible.

### Introduction

Systems and methods consistent with the present invention improve upon conventional ways of managing large build programs because they provide software developers with a tool that allows for more efficient text editing of code in the large build program. By storing makefiles and configuration files associated with a particular build version in a centralized file, the tool allows developers to edit individual lines of the makefile or configuration files. Developers may edit individual files by inserting, appending, or delete lines of code within the makefile or configuration file. The tool then permits propagation of the changes down through lower dependent levels of modules within the build when the large build program is compiled.

Systems, methods, and computer-readable media consistent with the present invention, also provide a graphical user interface (GUI) tool that depicts the large build program as a tree hierarchy structure. Developers using the tool may select any branch, or node, within the tree to edit the code of the program. By selecting one of the nodes from the tree structure, the developer can directly access the makefile for the particular configuration. The selected node contains code common to those nodes below the selected node and, thus, edits to the code at the selected node automatically propagate to the dependent lower levels of the configuration.

Individual nodes of the tree hierarchy may be selected for editing with a mouse, keyboard input, or other user input. The developer may then insert lines of code into the individual makefiles, delete lines of code, or edit a line of code. The edited makefile is then stored back into the centralized file. When the large build program is recompiled, the newly edited makefile is used and, thus, the changes automatically filter to the levels below the selected node.

### Computer System

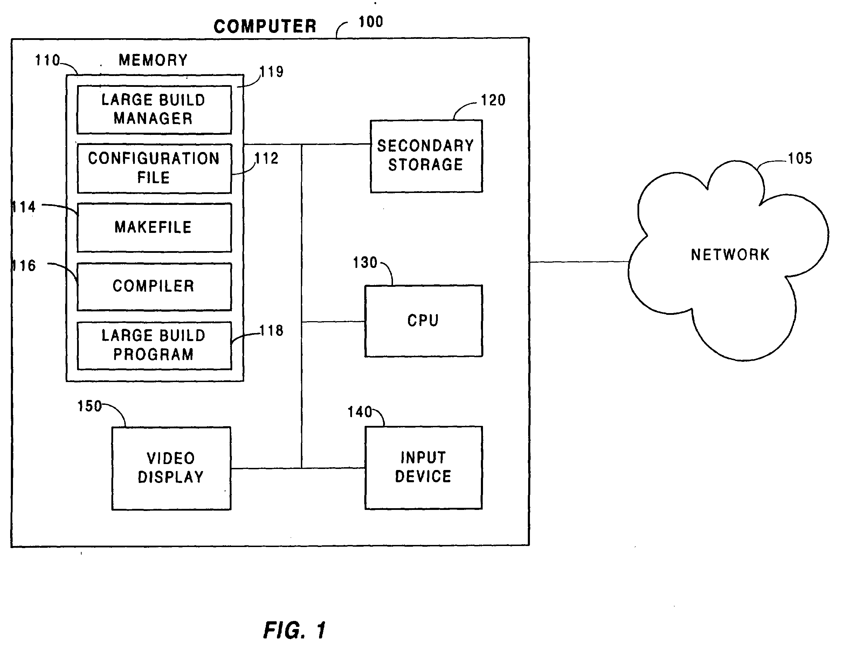

Fig. 1 depicts a computer 100 suitable for use with systems and methods consistent with the present invention. The exemplary computer system of Fig. 1 is for descriptive purposes only. Although the description may refer to terms commonly used in describing particular computer systems, such as in a IBM PS/2 personal computer or in a SPARC 2.0 workstation, the description and concepts equally apply to other computer systems, such as network computers and even mainframe computers having architectures dissimilar to Fig. 1. Sun, Sun Microsystems, and the Sun logo are trademarks or registered trademarks of Sun Microsystems, Inc. in the United States and other countries. SPARC trademarks are used under license and are trademarks of SPARC International, Inc. in the United States and other countries. Products bearing SPARC trademarks are based upon an architecture developed by Sun Microsystems, Inc.

Computer 100 includes memory 110, secondary storage device 120, central processing unit (CPU) 130, input device 140, and video display 150. As used herein, the term CPU is interchangeable with the term processor. Memory 110 includes a configuration file 112, a makefile 114, a compiler 116, a large build computer program 118, and a large build manager 119.

Makefile 114 represents a batch file containing text commands, call instructions for object code files, call instructions for build instructions, call instructions for library files, etc. Configuration file 112 also represents a batch file that includes code referencing compiler options, commands, directory locations, and a multiple of other options used by makefile 114. Collectively, configuration file 112 and makefile 114 provide the rules necessary to build or create large build program 118 such as an operating system or some other program. Further, while only a single makefile 114 and a single configuration file 112 are depicted in Fig. 1, those skilled in the art will recognize that each version of a large build software program consistent with the present invention will include at least one configuration file, and each configuration file may have dozens of associated makefiles.

Compiler 116 accesses the configuration files and makefiles during compilation of the representative version build. Compiler 116 compiles the source files, such as the configuration files and makefiles, each of which contain high-level language statements corresponding object code file references or references to modules containing coded commands. The high-level language statements maybe written in C, C++, Fortran, or the JAVA™ programming language. Although various aspects of the present invention are described as being stored in memory, other implementations consistent with the present invention may be implemented entirely in hardware.

Further, although computer 100 is depicted with various components, one skilled in the art will appreciate that this computer can contain additional or different components. CPU 120, for example, could represent a single processor or several processors used in conjunction with systems and methods consistent with the present invention. Further, the systems and methods consistent with the present invention could operate with one computer as shown in Fig. 1, or with several machines coupled to computer 100 via network 105. Additionally, although aspects of the present invention are described as being stored in memory, one skilled in the art will appreciate that these aspects can also be stored on or read from any other type of computer-readable media, such as secondary storage devices, like hard disks, floppy disks, or CD-ROM; a carrier wave from a network, such as the Internet; or other forms of RAM or ROM.

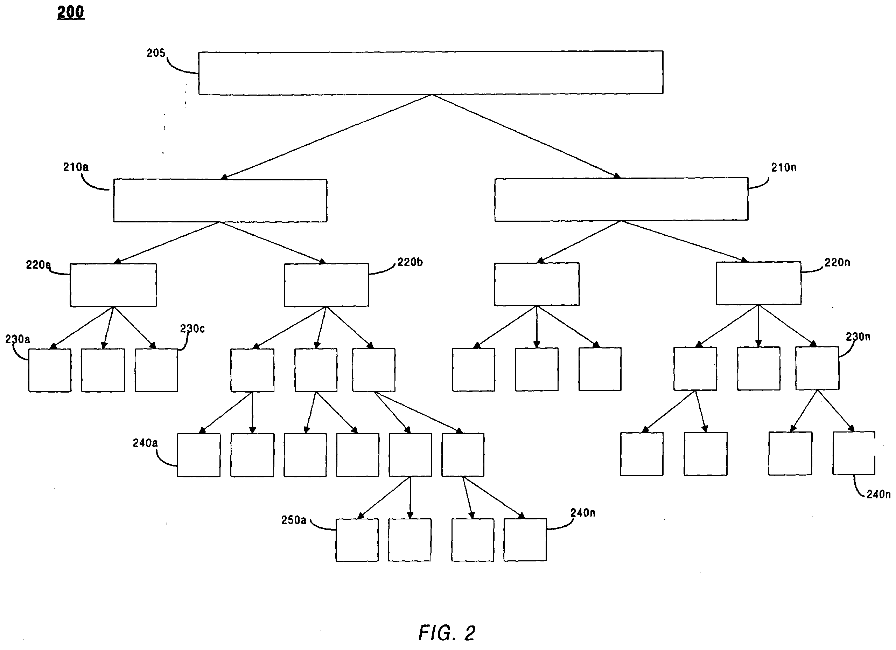

Fig. 2 is a logical view of a large build computer program 118 consistent with the present invention. As depicted in Fig. 2, large build program 118 takes the form of a hierarchy tree structure that includes several levels. Each branch of the tree represents a programming level containing various modules that further include lines of code. Each level includes a number of nodes (*i.e.*, on processor level 210, nodes 210 a-n correspond to the nodes at this level). Each node, in turn, represents modules containing lines of code and each lower level node has code common with the upper level node from which it depends. Finally, a makefile, in accordance with systems and methods consistent with the present invention, includes at least one module from every level. As depicted, large build program 118 includes an OS level 205, processor level 210, a vendor specific level 220, a chip architecture level 230, a thread level 240, and a library file level 250. The names given to these levels are for exemplary purposes only and those skilled in the art will recognize that systems and methods of the present invention will operate on any large build program architecture that include various programming levels or layers of operation.

As stated, each node on the various levels represents a module containing code that is common for those nodes over which the higher node resides. Node 230a-c, for example, would both common code, attributable to node 220a and code unique to the particular chip architecture represented by the node.

In Fig. 2, OS level 205 shows a single node, but this level may include several nodes that reflect an OS operative on a SOLARIS™-based work station from Sun Microsystems, a NT-based machine, from Microsoft, Corp. of Redmond, WA, etc. The nodes on processor level 210 represent different processor architectures such as a Pentium II processor, from Intel, Corp; a SPARC™-based processor, from Sun Microsystems; or a K6 processor, from Advanced Micro Devices, Inc., for example. Nodes on this level would preferably include common code as well as code unique to these particular processor architectures.

Similarly, the nodes that comprise vendor level 220 would include common code and code specifically tailored to operate with a particular software vendor's compiler specifications. Nodes 220 a-n, for example, could represent code developed by or for compiler vendors such as Sun Microsystems, Apogee Software, Inc. of Campbell, CA, Dakota Software Systems (DSS), or others. Nodes of chip architecture level 230 would include common code and code specific to particular peripheral chip architectures, such as V7, V8, or V8PLUS. Multithread level 240 would include common code from preceding level and code specifically designated to operate in a particular multithreaded or multiprocessor environment. The unique code at this level may include commands on how particular computing or compiling tasks are divided among the threads of the multiprocessor system. Finally, nodes 250a-250n located on library level 250 include common code and unique code used to call or invoke library command files from various other programs or object files.

Those skilled in the art will recognize that a complete makefile encompasses text from each of the levels or intermediate levels that may be added to large build program 118. Further, although the levels and nodes of large build program 118 are described in terms of its makefiles, the above description also applies to the configuration files of program 118.

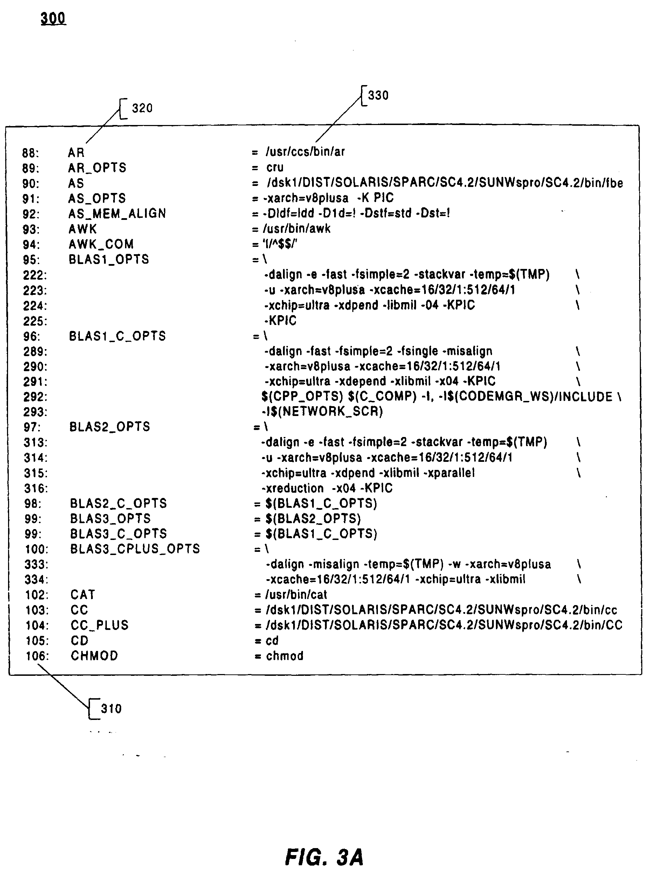

Fig. 3A depicts a sample configuration file 300 as viewed from a particular node level of large build program 118 consistent with the present invention. In this example, configuration file 300 depicts the code representative of at a library level node 250 and is identified as SOLARIS^SPARC^SUN^V8PLUS^MT^SHARED. With this identifying tag, a developer can determine the version or build this particular configuration file represents because "SOLARIS" represents the OS level 205; "SPARC" represents processor level 210; "SUN" represents vendor level 220; "V8PLUS" represents chip architecture level 230; "MT" represent multithread level 240; and "SHARED" represents library level 250. This nomenclature is for exemplary purposes only and does not depict the only manner in which configuration files may be identified. If, for example, other levels of programming or additional nodes were added to large build program 118, then the name of the file would change appropriately.

Configuration file 300 includes a number location field 310, an object call field 320, and a text-based code field 330. In accordance with the systems and methods consistent with the present invention, the individual lines of configuration file 300 are automatically assigned line numbers when they are entered, allowing a developer to select a particular line of code or instruction for editing. As the developer applies changes, the line numbers change accordingly. In configuration file 300, for example, line numbers jump from 95 to 222 for the BLAS1_OPTS commands. This increase occurs because line number 95 is common for all the nodes on this level, while the code in line numbers 222 through 225 are unique to this particular node. Similarly, the code in line numbers 289 through 293, line numbers 313 through 316, and line numbers 333 through 336 are unique to the selected node.

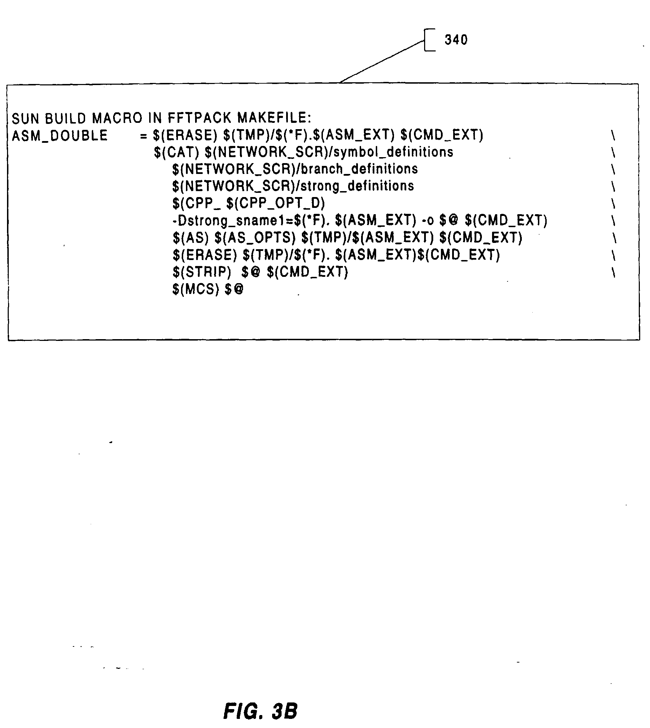

Fig. 3B depicts a portion of makefile 300 consistent with the systems and methods of the present invention. In this example, makefile 340 is a portion of a Sun Microsystems compiler specific makefile. The particulars of the lines of code within makefile 340 are not significant for the purposes of describing systems and methods consistent with the present invention. Further, a complete makefile would include the line numbers and fields similar to that show in Fig. 3A when stored by large build manager 119. Systems and methods consistent with the present invention allow software developers to edit these text instruction and have the edits filter through the dependent lower levels of large build system 119.

### Development Tool

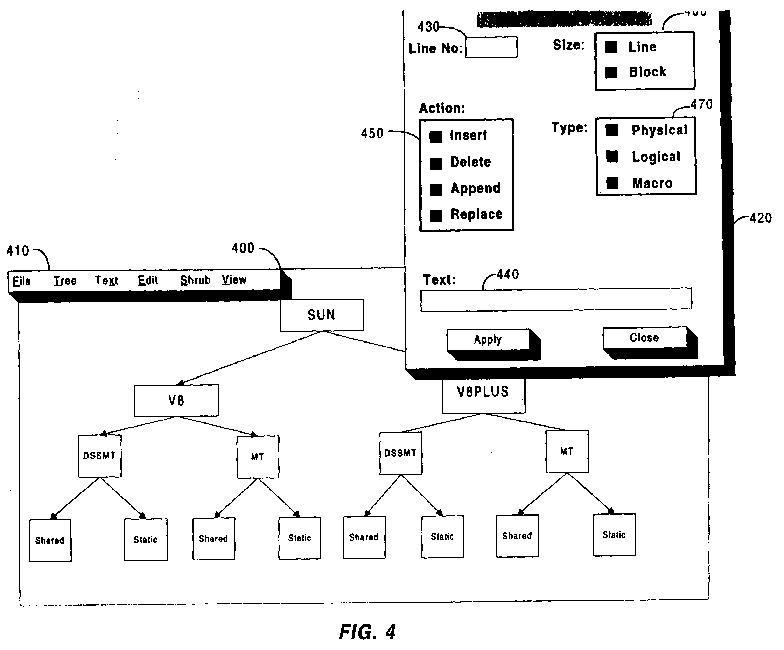

Fig. 4 depicts a representative view of a graphical user interface (GUI) as displayed by large build manager 119 that may be used in accordance with systems and methods consistent with the present invention. Large build manager 119 is an editing and access tool that allows a developer access to a particular level or node of large build program 118 and the code residing at the selected levels. Fig. 4 shows a "window" view 400 of large build program 118 that would be displayed on a computer screen such as video display 150, when the developer is editing program 118 that will ultimately result in a new version. Window view 400 shows only a portion of large build program 118 including certain nodes on the vendor level 230, the chip architecture level 240, and the library file level 250. Those skilled in the art will recognize that any portion of large build program 118 may be displayed in window view 400 by scrolling through the window depicted on video display 150.

Window view 400 includes a menu bar 410 used to select a particular function such as modifying text; viewing the display in either a hierarchical tree view or a file display view (*i.e.*, in the manner commonly associated with window-type GUIs); adding or deleting nodes; or copying text between nodes. Fig. 4 shows an example of a "modify text" dialog box 420 that may be displayed when a developer wants to edit the code residing at a particular node.

Dialog box 420 includes a line number field 430 for inputting a line number of a configuration file or makefile that is to be edited. Dialog box 420 also includes a text insertion field 440 to allow for direct addition of text-based code in a particular file. As shown in Fig. 4, dialog box 420 further includes a number of other editing selection choices such as editing action box 450, size selection box 460, and type editing box 470.

A developer may use editing action box 450 to select the type of editing that will take place on the line of code entered in line number field 430. Size selection box 460 allows the developer to chose whether a single line or entire block of code will be selected for editing. Those skilled in the art will recognize that the items listed in each of the editing selection boxes are for exemplary purposes only and other selection choices could be added or deleted from the various selection boxes.

When the code is edited using large build manager 119, the edited code becomes part of the configuration or makefile at the selected node. As a result, any node residing on levels below the selected nodes (*i.e.*, the node where editing occurred) will automatically include the edited code. As previously describe, this global editing technique prevents the developer from being required to manually enter the desired changes into each build or version of the large build program.

### Horizontal Integration of Edits

Systems and methods consistent with the present invention have been described in terms of vertical integration, where edits made at selected nodes are propagated down to dependent lower levels of large build program 118. In accordance systems and methods consistent with the present invention, however, horizontal integration of these edits can also be initiated by creating a file in which common code from the same level would reside. This file or "shrub" would include code common to each V8 node on chip architecture level 240, for example, regardless of the particular processor level, vendor level, or multithread level under which the V8 resides.

To create a shrub for a particular level, a developer would select a node displayed in window view 400 using a mouse or other input device. The developer could then select a "create" option from the "Shrub" menu heading in menu bar 410, as shown in Fig. 4, for example.

Shrubs are similar to the hierarchical tree except the shrubs are individually defined for specific editing purposes. Within the makefiles (or the configuration files), certain options and code is the same for the V8 nodes residing on chip architecture level 240, regardless of the particular tree branch from which they descend. If changes are required for the V8 nodes, for example, then the developer could select each V8 node and manually make the changes. This option, however, would require the developer to enter the edits a number of times to ensure the changes reached each V8 node of chip architecture level 240.

Shrubs eliminate this encumbrance because they can be individually created and defined by the developer so that each node within the shrub is effected by edits to the common code. The shrub would include code that is common to the particular nodes, in much the same manner that the nodes on lower levels include code common from their dependent higher level nodes. Further, when the developer inserts a line 65, for example, into the V8 shrub, each V8 node would include the code inserted at line 65 and the line number would also remain consistent through each node.

Once the file is created, the shrub may be selected for editing in the same manner and with the same type of GUI previously described. When a developer selects a node for editing, as described above, he would have the option of using large build manager 119 to edit (1) a shrub such that the changes are integrated horizontally to all the V8 nodes, for example, regardless of the particular vendor node 230a-n under which they reside; or (2) the code residing at an individual node and having the text edits take effect on the library level 250 nodes residing below the selected V8 node.

Regardless of the choice made, the edits are global (*i.e.*, to all associated files) thereby, reducing the time the developer expends on such changes. After the changes have been made, compiler 116 uses the updated file containing the edited makefiles and configuration files to create a new version of large build program 118.

### Process

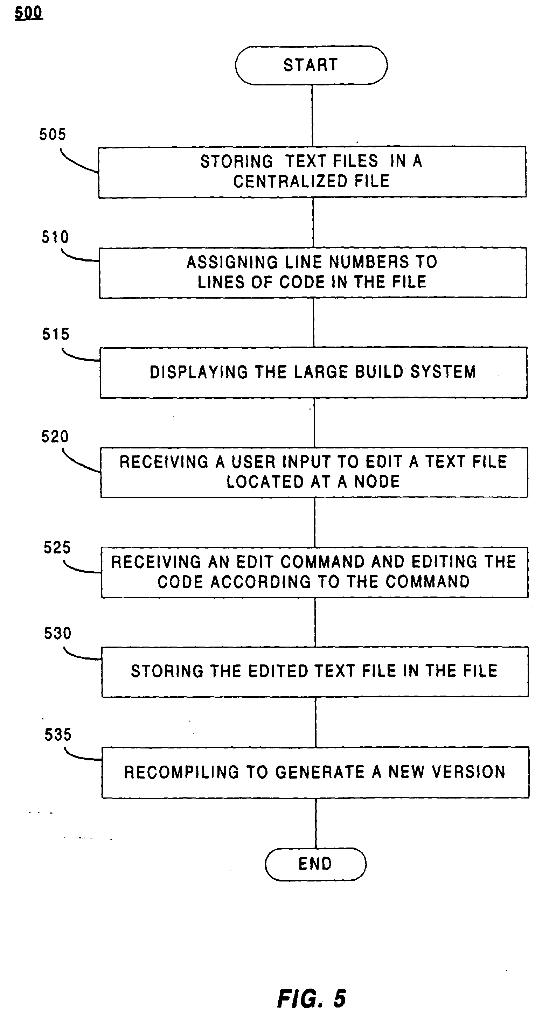

Fig. 5 depicts the major steps of method 500 of managing a large build computer program for use with systems and methods consistent with the present invention. Initially, large build manager 119 stores code common across each version or build of a large build program in a centralized file (step 505). For the purposes of this discussion, text files represent the makefiles and configuration files stored in memory 112 each of which include lines of text-based code. This gathering of the makefiles, for example, would ensure that the developer can refer to a centralized location each time an edit on a particular node is necessary. A module containing code common to those nodes residing below the selected level can be easily accessed for editing, deleting, insertion, etc.

When the text files are stored in the file, large build manager 119 automatically assigns a line number or other identifier to each line code is (step 510). Assigning a line number gives the developer a means for accessing and editing a particular line of code. Once new code has been stored and the lines of code numbered, large build manager 119 displays the large build program on video display 150 (step 515). Large build manager 119 displays the large build program as a hierarchical tree structure similar to that shown in Fig. 4. If changes must be made to a makefile or configuration file, the developer selects the appropriate node using input device 140 (step 520). The developer's input could consist of a keyboard stroke or a mouse click directly to video display 150.

Upon receiving an edit command, as described above, large build manager 119 edits a particular line or block of code in accordance with the developer's input (step 525.) Once the edits are completed, large build manager 119 updates the centralized file by storing the newly edited code therein (step 530.) Finally, when all the desired edits are completed, compiler 116, at the command of CPU 130, compiles the edited makefiles and configuration files to generate a new version of large build program 118 (step 535.)

### Conclusion

Methods, systems, and articles of manufacture consistent with the present invention thus enable developers to easily manage large build programs with multiple versions, builds, or configurations. These large build programs include several programming "levels" with each level including a number of nodes. By displaying the large build program in a hierarchal tree format, methods, systems, and articles of manufacture consistent with the present invention give developers access to any of the system's programming levels. The branches of the tree in the large build program are represented by nodes, with each node housing a collection of the text files. The text files include code common to the particular branch of the tree such that all the nodes on the lower levels include code common to the node from which the lower level node depends. For example, a node residing on a chip architecture level (lower level) includes all the code from the level (upper level) from which it branches. Therefore, every chip architecture node descending from the same processor programming level, or branch, includes code common with respect to the processor level.

The makefiles and configuration files, described herein, containing the common code are stored in a centralized location to allow the developer convenient accessibility. When edits are necessary, the developer locates a particular makefile or configuration file by selecting a node on the display and inputs the changes. Edits made at any node are filtered down to lower levels, thus saving the developer from making the same edits several times. Upon recompiling, a new version of the large build program is created.

The foregoing description of an implementation of the invention has been presented for purposes of illustration and description. It is not exhaustive and does not limit the invention to the precise form disclosed. Modifications and variations are possible in light of the above teachings or may be acquired from practicing of the invention. For example, the described implementation includes software but the present invention may be implemented as a combination of hardware and software or in hardware alone. The invention may be implemented with both object-oriented and non-object-oriented programming systems. The scope of the invention is defined by the claims and their equivalents.

## Claims

1. In a data processing system, a method for managing a program having a plurality of programming levels, the method comprising the steps of:
displaying the program as a hierarchical tree structure, wherein a branch of the tree corresponds to a programming level, wherein each branch includes a plurality of nodes, and wherein lower-level nodes include code common to upper-level nodes from which the lower-level nodes depends;
storing the common code in a file;
receiving user input selecting a node for editing;
editing a line of code within the file responsive to receiving the user input; and
compiling the program to create a new version, wherein the new version includes the edited code.

2. The method of claim 1, wherein the common code corresponds to a makefile and wherein the step of storing includes the substep of:
assigning a number to each line of code in the makefile.

3. The method of claim 1, wherein the common code corresponds to a configuration file and wherein the step of storing includes the substep of:
assigning a number to each line of code in the configuration file.

4. A computer-readable medium containing instructions for instructing a computer to perform a method of managing a program having a plurality of programming levels, the method comprising the steps of:
displaying the program as a hierarchical tree structure, wherein a branch of the tree corresponds to a programming level, wherein each branch includes a plurality of nodes, and wherein lower-level nodes include code common to upper-level nodes from which the lower-level nodes depend;
storing the common code in a file;
receiving user input selecting a node for editing;
editing a line of code within the file responsive to receiving the user input; and
compiling the program to create a new version of the program, the new version including the edited code.

5. The computer-readable medium of claim 4, wherein the common code corresponds to a makefile and wherein the step of storing includes the substep of:
assigning a number to each line of the makefile.

6. The computer-readable medium of claim 4, wherein the common code corresponds to a configuration file and wherein the step of storing includes the substep of:
assigning a number to each line of the configuration file.

7. An apparatus comprising:
a memory configured to store a program having a plurality of levels;
a development tool configured to display the program as a hierarchical tree structure, wherein a branch of the tree corresponds to a programming level, wherein each branch includes a plurality of nodes, and wherein lower-level nodes include code common to upper-level nodes from which the lower-level nodes depend, configured to receive user input selecting a node for editing, and configured to edit code within the file in accordance with the user input; and
at least one processor configured to generate a new version of the program, the new version including the edited code.

8. The data processing system of claim 7, wherein the development tool includes a graphical user interface.

9. A data processing system for managing a program having a plurality of programming levels, the system comprising:
means for displaying the program as a hierarchical tree structure, wherein a branch of the tree corresponds to a programming level, wherein each branch includes a plurality of nodes, and wherein lower-level nodes include code common to upper-level nodes from which the lower-nodes descend;
means for storing the common code in a file;
means for receiving user input selecting a lower-level node for editing;
means for editing a line of code within the file responsive to receiving the user input; and
means for compiling the program to create a new version of the program, the new version including the edited code.

10. In a data processing system, a method for managing a program having a plurality of programming levels, the method comprising the steps of:
displaying the program as a hierarchical tree structure, wherein a branch of the tree corresponds to one of the programming levels, and wherein each branch includes a plurality of nodes; wherein nodes residing on the same level include common code;
creating a shrub by storing the common code in a file, the shrub corresponding to a number of nodes residing on the same programming level;
receiving user input selecting the shrub for editing;
editing the code within the file responsive to receiving the user input; and
compiling the program to create a new version of the program, the new version including the edited code.

11. A method in a data processing system, for managing a program having a plurality of programming levels, the method comprising:
receiving a program with a plurality of modules; and
displaying the program in a hierarchical tree structure, wherein each branch of the tree includes at least one module.

12. The method of claim 11, wherein the program includes a makefile having lines of code and the step of receiving includes the substeps of
receiving the makefile;
numbering the lines of code; and
storing the makefile in a centralized file.

13. The method of claim 11, wherein the program includes a configuration file having lines of code and the step of receiving includes the substeps of
receiving the configuration file;
numbering the lines of code; and
storing the configuration file in a centralized file.
